# EUROPEAN PATENT SPECIFICATION

(11) **EP 0 910 242 B1**
(45) Date of publication and mention of the grant of the patent: **16.08.2000**
(21) Application number: 97929911.2
(22) Date of filing: 06.06.1997
(51) Int. Cl.: A01K 15/02

(54) **PET TOY PRODUCT WITH INTEGRAL TREATS RECEIVING RECEPTACLES**
SPIELZEUGVORRICHTUNG FÜR HAUSTIERE MIT INTEGRIERTEN, FUTTER AUFNEHMENDEN KAMMERN
JOUETS POUR ANIMAUX DE COMPAGNIE MUNIS DE RECEPTACLES INTEGRES POUR FRIANDISES

(30) Priority: 13.06.1996 US 663447
(43) Date of publication of application: 28.04.1999
(73) Proprietor: Bounce, Inc. doing business as The Kong Company, Golden, Colorado 80403-1641 (US)
(72) Inventor: MARKHAM, Joseph, P., Arvada, CO 80005 (US)
(74) Representative: Mackenzie, Andrew Bryan
(86) International application number: US9710072
(87) International publication number: WO9747186

(56) References cited:
- DE-U- 29 519 685
- US-E- R E34 352

## Description

This invention relates to a pet toy product, and more particularly to a pet toy product having recesses and openings for receiving treats.

Chewable pet toys have been available for many years. Many are impregnated with odors or flavoring materials which are attractive to the animal for which the toy is intended. These toys can be made of various materials, such as rawhide, rubber and plastic. The shortcoming of these products is that after a period of time, the flavor and/or odor becomes less strong and the animal loses interest in the toy. No means is provided for subsequently enhancing the flavor and odor of the toy.

Tay (US Des. Patent No. 188,179) discloses a pet food holder which has a hollow center for holding food.

Allis (US Patent No. 1,149,170); Jones (US Patent No. 260,851); and Edwards (US Patent Nos. 4,513,014 and 4,557,219) each disclose a pet toy having a flavoring material impregnated therein.

Fisher (US Patent No. 3,104,648) discloses a pet toy which is odor impregnated.

Markham (US Patent No. Re. 34,352) discloses a therapeutic pet toy having parallel peripheral grooves in which oral hygiene substances may be placed.

Axlerod (US Patent No. 3,871,334) and Miller (US Patent Nos. 3,899,607 and 4,032,665) each disclose pet toys which are both flavor and odor impregnated.

DE-U-29519685 discloses a pet toy having two parts which may be fitted together.

When the two parts are fitted together, they define a hollow interior of the toy which may be used to hold animal food. The toy may be made from rubber or plastic.

Jungle Talk International sells a product for birds made of wood which has openings in which nuts are firmly fixed. The bird must substantially destroy the wood in order to reach the nuts. Thus, the product cannot be reloaded and reused.

A product known as a "Buster Cube" has an opening in which dry dog food is poured. As a dog knocks it over in playing with it, the food runs out so that the dog can eat it.

Although each of these inventions is suitable for its intended purpose, none provide means on the exterior surface thereof for holding animal treats for keeping the animal interested in the toy.

According to a first aspect of the invention there is provided a pet toy product which includes one or more edible treats to induce an animal to play with said pet toy product, said pet toy product comprising a molded body member having a flexible side wall and an outer surface; a plurality of recesses formed in the body member; and edible food treats positioned in at least some of said plurality of recesses characterised in that the recesses are adapted to grip the treats and in that the recesses are geometrically arranged on at least a portion of said outer surface.

According to a second aspect of the invention there is provided a pet toy product including an edible food treat to induce an animal to play with said pet toy product, said pet toy product comprising an edible food treat; and a body member having a flexible side wall with an outer surface characterised by a plurality of geometrically arranged recesses extending completely through said side wall to form openings, at least one of said openings holding said edible food treat in a fixed position.

According to a third aspect of the invention there is provided a method of entertaining an animal, said method comprising the steps of providing a pet toy having a plurality of recesses and a flexible outer surface inserting a first pet treat in some of the plurality of recesses so as to be retained within the recess until dislodged by the animal, inserting a second pet treat in others of the plurality of recesses so as to be retained within the recesses until dislodged by the animal, and giving the pet toy to the animal characterised by the recesses being formed on the outer surface and with different depths.

According to a fourth aspect of the invention there is provided a pet toy product which includes one or more edible food treats to induce an animal to play with said pet toy product, said pet toy produce comprising, a body member having a flexible side wall with an outer surface, characterised by means for releasably retaining the edible food treats, an edible food treat being positioned in at least some of said retaining means, said retaining means being formed through said body member, said retaining means extending through various depths of said side wall, and at least some of said retaining means not extending completely through said side wall.

Preferably the pet toy product is provided for holding, by friction or adhesion, one or more animal treats wherein the toy has a body member having an outer surface with one or more recesses for receiving one or more animal treats. The term "treat" is intended to include any items which are attractive to or are consumed by an animal. The recesses may be of varying depth so that the treats in the deeper recesses are more difficult for the animal to extract than are the treats in the shallower recesses. The recesses may be circular, triangular, irregular, or in the form of a groove or any other suitable configuration. The outer surface of the toy may be raised to accommodate the recesses or the recesses may extend into the surface. Finally, the pet toy may have a recess forming an opening which extends completely through the side wall for receiving a treat. With the structure recited, the pet owner can replenish the treats as often as necessary to maintain the pet's interest in the toy. Different treats can be provided with different nutritional values and tastes. Also, because some treats will be harder for the animal to remove than others, the animal can be kept occupied for several hours before the treats need to be replaced again. The toy may be made of molded rigid or flexible material which can accommodate different types of treats. This construction allows the toy to be used repeatedly by refilling the recesses with more treats.

The invention will now be described by way of example with reference to the drawings in which:

Figure 1 is an illustration of an animal playing with one form of the present invention.

Figure 2 is a perspective view of a variety of forms of pet toy products embodying the invention.

Figure 3 is a fragmentary perspective view of a portion of a first embodiment of the pet toy product of this invention showing recesses of varying depth containing animal treats.

Figure 4 is a lateral section, taken along line 4-4 of Figure 3, showing the different depths of the recesses with treats therein.

Figure 5 is a fragmentary perspective view of a portion of a second embodiment of the pet toy product of this invention having longitudinal grooves for receiving animal treats and showing a liquid treat being inserted into the grooves.

Figure 6 is a lateral section, taken along line 6-6 of Figure 5, showing the different depths of the recesses with treats therein.

Figure 7 is a fragmentary perspective view of a portion of a third embodiment of the pet toy product of this invention having longitudinal grooves which are raised above the surface of the toy.

Figure 8 is a fragmentary perspective view of a portion of a fourth embodiment of the pet toy product of this invention having a plurality of recesses formed in a plurality of raised areas;

Figure 9 is a lateral section, taken along line 9-9 of Figure 8, showing the different depths of the recesses with treats therein;

Figure 10 is a fragmentary perspective view of a portion of a fifth embodiment of the pet toy product of this invention having a triangular recess;

Figure 11 is a fragmentary perspective view of a portion of a sixth embodiment of the pet toy product of this invention having a recess extending through the side wall of the pet toy to form an opening for receiving an animal treat; and

Figure 12 is a fragmentary perspective view, similar to Figure 11, but showing a treat positioned within the opening.

### Best Mode For Carrying Out The Invention

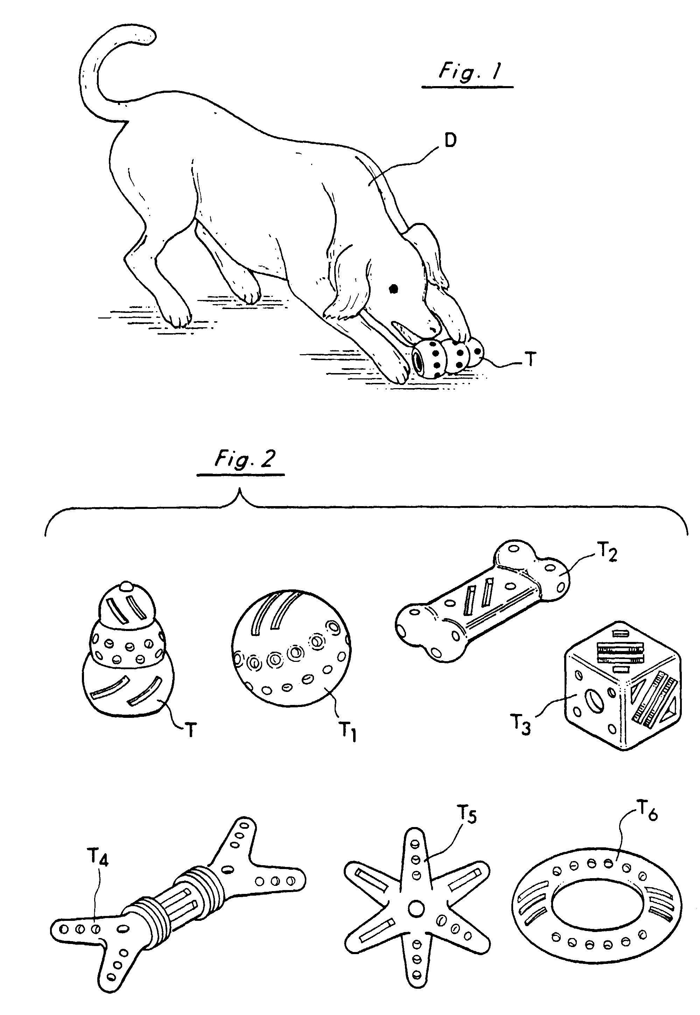

In accordance with this invention, an animal, such as dog D, is shown in Figure 1 playing with the pet toy product T of this invention. As best seen in Figure 2, the pet toy product may have a variety of configurations, such as ball T₁, bone-shaped pet toy product T₂, box-shaped pet toy product T₃, elongated pet toy product T₄, star-shaped pet toy product T₅ and annular pet toy product T₆. The recesses shown in these pet toy products can be of varying depths, as described below. These configurations are exemplary only and other configurations will be apparent to one of ordinary skill in the art and such other shapes are intended to be included within the scope of this invention.

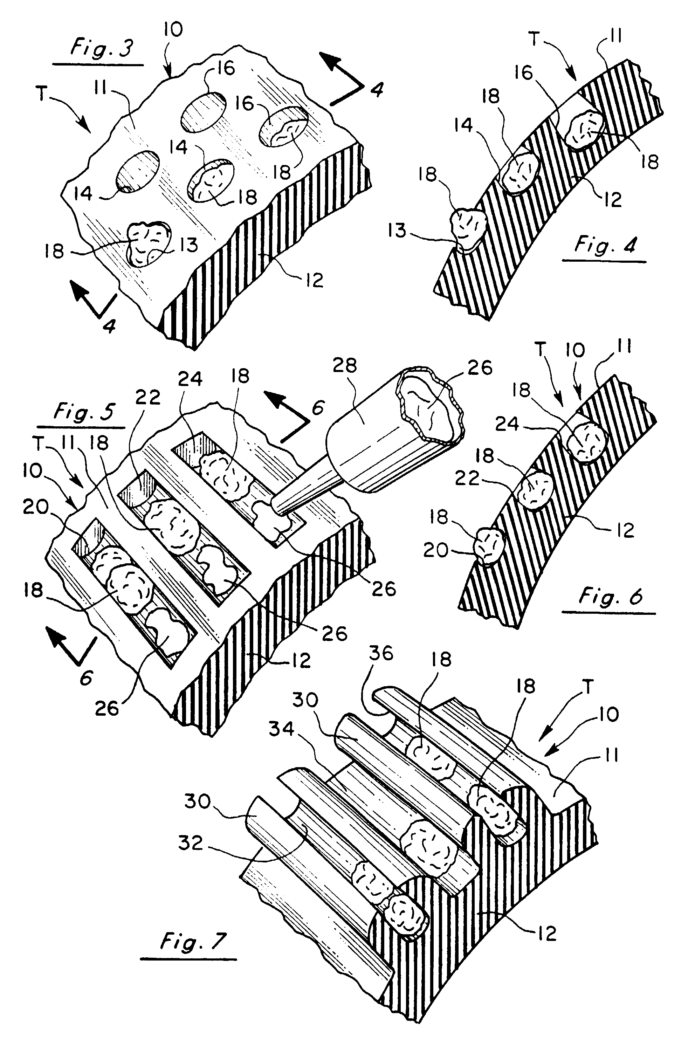

One embodiment of pet toy product T is shown in Figures 3 and 4. The pet toy product T includes a body member 10 with an outer surface 11 which generally defines the shape of the pet toy product T. Body member 10 has a depth defined by side wall 12 which includes a plurality of depressions or recesses, such as shallow recess 13, medium recess 14 and deep recess 16. Each of the respective recesses has an animal treat 18 which may be inserted therein. The treat can be wedged into a recess in a rigid toy product or can be resiliently gripped by the side surfaces of a flexible product. In other words, the treat is releasably and frictionally held in the recess. An adhesive could also be used to attached the treat within the recess. For example, this treat can be dry pet food. The animal can readily remove the treat 18 from shallow recess 13, but must work harder to recover the treat 18 in medium recess 14. Likewise, the animal must work extra hard to remove treat 18 within deep recess 16.

Another embodiment of pet toy product T is shown in Figures 5 and 6. Specifically, side wall 12 is provided with a plurality of grooves, such as shallow groove 20, medium groove 22 and deep groove 24. A treat 18 can be placed in each of these grooves so that the animal experiences different levels of difficulty in the recovery of the treats from the respective grooves. Additionally, a second liquid or paste treat 26, such as peanut butter or soft cheese, can be placed in the grooves, as from a dispenser 28. This type of treat will be retained by adhesion. This allows the animal to enjoy more than one treat with the same toy.

A further embodiment of the invention is shown in Figure 7 wherein the side wall 12 of pet toy product T is provided with raised portions 30 which form laterally spaced grooves 32, 34 and 36, respectively. As shown, these grooves can be supplied with one or more treats 18.

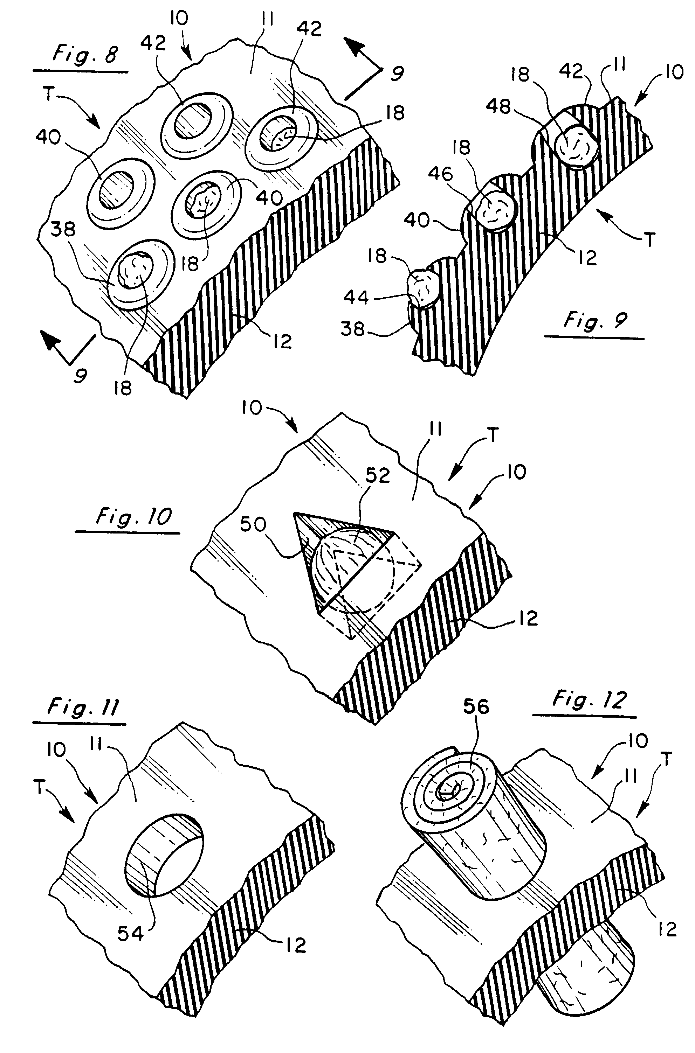

A still further embodiment of this invention is shown in Figures 8 and 9 wherein the side wall 12 of pet toy product T has a plurality of raised portions 38, 40 and 42. Raised portion 38 has a shallow recess 44 formed therein; raised portion 40 has a medium recess 46 formed therein; and raised portion 42 has a deep recess 48 formed therein. As shown, treats 18 can be placed in each of these recesses, thus providing different degrees of difficulty for the animal to remove them.

In the embodiment of Figure 10, side wall 12 of pet toy product T is provided with a triangular recess 50 for receiving a hard treat 52, such as a nut. This form of the invention is particularly attractive for birds, such as parrots, which can use their beaks and/or talons in the space between the corners of the recess and the treat to dislodge the treat.

Figures 11 and 12 disclose an embodiment wherein side wall 12 has a recess which extends completely therethrough to form an opening 54 through which a treat 56, such as rawhide can be received.

Although separate embodiments have been illustrated, it is to be understood that the characteristics of one or more embodiments can be incorporated within the same pet toy product. For example, as shown in pet toy products T₁ and T₅, these toys incorporate a combination of recesses 12, 14, 16, 44, 46, 48 and opening 54.

From the foregoing, the advantages of the present invention are readily apparent. A pet toy having various configurations is provided which has recesses or grooves of varying size and depth for releasably receiving one or more animal treats. Because of the varying depth of the recesses, the animal will experience different degrees of difficulty in removing the treats from the pet toy product. Thus, the pet toy product can keep the animal occupied for extended periods of time. The pet toy product can also be used for birds. The owner can replace the treats by inserting them as needed into the recesses. These treats can take the form of dry pet food, liquid or paste snacks, such as peanut butter or soft cheese. Nuts and vegetables pieces can be provided in the recesses when the pet toy product is used for a bird. In other words, any product to which the animal is attracted can be placed in the recesses. Since the toy is not destroyed by the removal of the treats, the toy can be reloaded with additional treats or foods for reuse.

Although this invention has been described with respect to use with pets, it is understood that it can be used with other animals not usually considered as pets.

## Claims

1. A pet toy product (T) which includes one or more edible treats to induce an animal to play with said pet toy product, said pet toy product comprising:
a molded body member (10) having a flexible side wall (12) and an outer surface;
a plurality of recesses formed in the body member; and
edible food treats (18) positioned in at least some of said plurality of recesses;
characterised in that the recesses are adapted to grip the treats and in that the recesses (13,14,16) are geometrically arranged on at least a portion of said outer surface.

2. A pet toy product, as claimed in claim 1, wherein:
said plurality of recesses (13,14,16) are of varying depths so that the treats in recesses having deeper depths are more difficult for the animal to extract than are the treats in the recesses having shallower depths.

3. A pet toy product as claimed in claim 1, wherein:
at least some of said recesses are generally circular shaped.

4. A pet toy product, as claimed in claim 1, wherein:
at least some of said recesses are side-by-side grooves (20,22,24,32,34,36) including a common side wall (30) positioned therebetween.

5. A pet toy product as claimed in claim 1, wherein:
at least one of said recesses (50) is triangular shaped.

6. A pet toy product, as claimed in claim 1, wherein:
said outer surface has a plurality of raised areas (38,40,42) and at least some of said plurality of recesses (44,46,48) are formed respectively in said plurality of raised areas (38,40,42).

7. A pet toy product (T) including an edible food treat (18) to induce an animal to play with said pet toy product, said pet toy product comprising:
an edible food treat (18); and
a body member (10) having a flexible side wall (12) with an outer surface,
characterised by a plurality of geometrically arranged recesses extending completely through said side wall (12) to form openings (54), at least one of said openings holding said edible food treat (56) in a fixed position.

8. A pet toy product, as claimed in claim 1 or claim 7, wherein said plurality of recesses further include:
means for resiliently gripping said edible food treats.

9. A pet toy product, as claimed in claim 7, further including:
a first type of edible food treat in at least one of said plurality of recesses; and
a second type of edible food treat in another of said plurality of said recesses.

10. A method of entertaining an animal, said method comprising the steps of:
providing a pet toy (T) having a plurality of recesses (13,14,16) and a flexible outer surface;
inserting a first pet treat (18) in some of the plurality of recesses so as to be retained within the recess until dislodged by the animal;
inserting a second pet treat (18) in others of the plurality of recesses so as to be retained within the recesses until dislodged by the animal; and
giving the pet toy to the animal;
characterised by the recesses being formed on the outer surface and with different depths.

11. A method, as claimed in claim 10, wherein said inserting step includes:
frictionally attaching the first and second treats within the recesses.

12. A method, as claimed in claim 10, wherein said inserting step includes:
using adhesion to secure the first and second treats within the recesses.

13. A method, as claimed in claim 10, including the further step of:
inserting a plurality of said first or second pet treats in at least one of the plurality of recesses.

14. A pet toy product (T) which includes one or more edible food treats (18) to induce an animal to play with said pet toy product, said pet toy product comprising:
a body member (10) having a flexible side wall (12) with an outer surface;
characterised by means for releasably retaining the edible food treats, an edible food treat (18) being positioned in at least some of said retaining means, said retaining means being formed through said body member, said retaining means extending through various depths of said side wall, and at least some of said retaining means not extending completely through said side wall.

15. A pet toy product, as claimed in claim 14, wherein:
said body member encompasses a substantial closed hollow interior.

16. A pet toy product, as claimed in claim 14, wherein:
said retaining means secures said edible food treat by friction.

17. A pet toy product, as claimed in claim 14, wherein:
said retaining means retains said edible food treat as by adhesion.

## Patentansprüche

1. Spielzeuggegenstand (T) für Haustiere, der ein oder mehrere eßbare Futterstücke enthält, um ein Tier dazu anzuregen, mit dem Spielzeuggegenstand für Haustiere zu spielen, wobei der Spielzeuggegenstand für Haustiere umfaßt:
ein geformtes Körperteil (10) mit einer flexiblen Seitenwand (12) und einer Außenfläche;
eine Mehrzahl in dem Körperteil gebildeter Ausnehmungen; und
eßbare Futterstücke (18), die in mindestens einigen der Mehrzahl von Ausnehmungen angeordnet sind; **dadurch gekennzeichnet,** daß die Ausnehmungen die Futterstücke ergreifen können und daß die Ausnehmungen (13, 14, 16) geometrisch in zumindest einem Bereich der Außenfläche angeordnet sind.

2. Spielzeuggegenstand für Haustiere, wie in Anspruch 1 beansprucht, bei dem die Mehrzahl Ausnehmungen (13, 14, 16) unterschiedliche Tiefen aufweisen, so daß die Futterstücke in den Ausnehmungen mit tieferen Tiefen schwieriger für das Tier als die Futterstücke herauszuholen sind, die in den Ausnehmungen mit geringeren Tiefen sind.

3. Spielzeuggegenstand für Haustiere, wie in Anspruch 1 beansprucht, bei dem zumindest einige Ausnehmungen allgemein kreisförmig geformt sind.

4. Spielzeuggegenstand für Haustiere, wie in Anspruch 1 beansprucht, bei dem zumindest einige der Ausnehmungen nebeneinanderliegende Nuten (20, 22, 24, 32, 34, 36) sind, die eine dazwischen angeordnete, gemeinsam Seitenwand (30) umfassen.

5. Spielzeuggegenstand für Haustiere, wie in Anspruch 1 beansprucht, bei dem zumindest eine der Ausnehmungen (50) dreieckförmig ist.

6. Spielzeuggegenstand für Haustiere, wie in Anspruch 1 beansprucht, bei dem die Außenfläche eine Mehrzahl erhabener Bereiche (38, 40, 42) aufweist und zumindest einige der Mehrzahl von Ausnehmungen (44, 46, 48) jeweils in der Mehrzahl erhabener Bereiche (38, 40, 42) gebildet ist.

7. Spielzeuggegenstand (T) für Haustiere, der ein eßbares Futtermittelstück (18) umfaßt, um ein Tier dazu anzuregen, mit dem Spielzeuggegenstand für Haustiere zu spielen, wobei der Spielzeuggegenstand für Haustiere umfaßt:
ein eßbares Futtermittelstück (18) und
einen Körperteil (10) mit einer flexiblen Seitenwand (12) mit einer Außenfläche, **gekennzeichnet durch** eine Mehrzahl geometrisch angeordneter Ausnehmungen, die sich vollständig durch die Seitenwand (12) hindurch erstrecken, um Öffnungen (54) zu bilden, wobei zumindest eine der Öffnungen das eßbare Futtermittelstück (56) in einer festen Position hält.

8. Spielzeuggegenstand für Haustiere, wie in Anspruch 1 oder Anspruch 7 beansprucht, wobei die Mehrzahl Ausnehmungen des weiteren Mittel umfaßt, um die eßbaren Futtermittelstücke elastisch zu ergreifen.

9. Spielzeuggegenstand für Haustiere, wie in Anspruch 7 beansprucht, der des wieteren eine erste Art eßbares Futtermittelstück in zumindest einer der Mehrzahl von Ausnehmungen und eine zweite Art eßbares Futtermittelstück in einer anderen der Mehrzahl von Ausnehmungen umfaßt.

10. Verfahren zum Unterhalten eines Tiers, wobei das Verfahren die Schritte umfaßt:
Bereitstellen eines Spielzeugs (T) für Haustiere, das eine Mehrzahl Ausnehmungen (13, 14, 16) und eine flexible Außenfläche aufweist;
Einführen eines ersten Haustierfuttermittels (18) in einige der Mehrzahl von Ausnehmungen derart, daß es in den Ausnehmungen gehalten wird, bis es von dem Tier gelöst wird; und
Einführen eines zweites Haustierfuttermittels (18) in andere der Mehrzahl von Ausnehmungen derart, daß es in den Ausnehmung gehalten wird, bis es von dem Tier gelöst wird; und
dem Tier das Spielzeug für Haustiere zu geben; **dadurch gekennzeichnet,** daß die Ausnehmungen auf der Außenfläche und mit unterschiedlichen Tiefen gebildet sind.

11. Verfahren, wie in Anspruch 10 beansprucht, wobei der Einsetzschritt umfaßt, das erste und das zweite Futtermittelstück in den Ausnehmungen reibungsmäßig anzubringen.

12. Verfahren, wie Anspruch 10 beansprucht, wobei der Einsetzschritt umfaßt, ein Haftmittel zu verwenden, das erste und zweite Futtermittelstück in den Ausnehmungen anzubringen.

13. Verfahren, wie in Anspruch 10 beansprucht, das den Schritt umfaßt, eine Mehrzahl erster oder zweiter Futtermittelstücke für Haustiere in zumindest eine der Mehrzahl vonAusnehmungen einzusetzen.

14. Spielzeuggegenstand (T) für Haustiere, der einen oder mehrere eßbare Futtermittelstücke (18) umfaßt, um ein Tier anzuregen, mit dem Spielzeuggegenstand für Haustiere zu spielen, wobei der Spielzeuggegenstand für Haustiere umfaßt:
einen Körperteil (10), der eine flexible Seitenwand (12) mit einer Außenfläche aufweist, **gekennzeichnet durch** Mittel, um die eßbaren Futtermittelstücke lösbar zurückzuhalten, wobei ein eßbares Futtermittelstück (18) in zumindest einigen der Haltemittel angeordnet ist, die Haltemittel über das Körperteil gebildet sind, sich die Haltemittel durch verschiedene Tiefen der Seitenwand hindurch erstrecken und sich zumindest einige der Haltemittel nicht vollständig durch die Seitenwand hindurch erstrecken.

15. Spielzeuggegenstand für Haustiere, wie in Anspruch 14 beansprucht, bei dem das Körperteil einen im wesentlichen geschlossenen, hohlen Innenraum einschließt.

16. Spielzeuggegenstand für Haustiere, wie in Anspruch 14 beansprucht, bei dem die Haltemittel eßbare Futtermittelstücke durch Reibung befestigen.

17. Spielzeuggegenstand für Haustiere, wie in Anspruch 14 beansprucht, bei dem die Haltemittel eßbare Futtermittelstücke durch Anhaftung zurückhalten.

## Revendications

1. Jouet pour animal de compagnie (T) qui comprend une ou plusieurs friandises comestibles destinées à amener un animal à jouer avec ledit jouet pour animal de compagnie, ledit jouet pour animal de compagnie comportant :
un élément de corps moulé (10) ayant une paroi latérale flexible (12) et une surface extérieure;
une multiplicité de renfoncements formés dans l'élément de corps; et
des friandises alimentaires comestibles (18) positionnées dans au moins certains renfoncements de ladite multiplicité de renfoncements;
caractérisé en ce que les renfoncements sont prévus pour retenir les friandises et en ce que les renfoncements (13, 14, 16) sont disposés de manière géométrique sur au moins une partie de ladite surface extérieure.

2. Jouet pour animal de compagnie selon la revendication 1, dans lequel : les différents renfoncements (13, 14, 16) sont de profondeurs variables de sorte que les friandises dans les renfoncements ayant des profondeurs plus importantes sont plus difficiles à extraire par l'animal que les friandises dans les renfoncements ayant des profondeurs moins importantes.

3. Jouet pour animal de compagnie selon la revendication 1, dans lequel : au moins certains desdits renfoncements sont de forme globalement circulaire.

4. Jouet pour animal de compagnie selon la revendication 1, dans lequel : au moins certains desdits renfoncements sont des rainures côte à côte (20, 22, 24, 32, 34, 36) comprenant une paroi latérale commune (30) positionnée entre elles.

5. Jouet pour animal de compagnie selon la revendication 1, dans lequel : au moins un desdits renfoncements (50) est de forme triangulaire.

6. Jouet pour animal de compagnie selon la revendication 1, dans lequel : ladite surface extérieure possède plusieurs zones relevées (38, 40, 42) et au moins certains renfoncements de ladite multiplicité de renfoncements (44, 46, 48) sont formés de manière respective dans ladite multiplicité de zones relevées (38, 40, 42).

7. Jouet pour animal de compagnie (T) comprenant une friandise alimentaire comestible (18) destinée à amener un animal à jouer avec ledit jouet pour animal de compagnie, ledit jouet pour animal de compagnie comportant :
une friandise alimentaire comestible (18); et
un élément de corps (10) ayant une paroi latérale flexible (12) avec une surface extérieure, caractérisé par une multiplicité de renfoncements disposés de manière géométrique qui s'étendent totalement à travers ladite paroi latérale (12) afin de former des ouvertures (54), au moins une desdites ouvertures maintenant ladite friandise alimentaire comestible (56) dans une position fixe.

8. Jouet pour animal de compagnie selon la revendication 1 ou la revendication 7, dans lequel ladite multiplicité de renfoncements comprend en outre : des moyens destinés à retenir de manière élastique lesdites friandises alimentaires comestibles.

9. Jouet pour animal de compagnie selon la revendication 7, comprenant en outre : un premier type de friandise alimentaire comestible dans au moins un renfoncement de ladite multiplicité de renfoncements; et un deuxième type de friandise alimentaire comestible dans un autre renfoncement de ladite multiplicité de renfoncements.

10. Procédé de divertissement d'un animal, ledit procédé comportant les étapes consistant à :
prévoir un jouet pour animal de compagnie (T) ayant une multiplicité de renfoncements (13, 14, 16) et une surface extérieure flexible,
insérer une première friandise pour animal de compagnie (18) dans certains renfoncements de la multiplicité de renfoncements de façon à être retenue à l'intérieur du renfoncement jusqu'à être délogée par l'animal,
insérer une deuxième friandise pour animal de compagnie (18) dans d'autres renfoncements de la multiplicité de renfoncements de façon à être retenue à l'intérieur des renfoncements jusqu'à être délogée par l'animal, et
donner le jouet pour animal de compagnie à l'animal,
caractérisé par les renfoncements qui sont formés sur la surface extérieure et avec des profondeurs différentes.

11. Procédé selon la revendication 10, dans lequel ladite étape d'insertion comprend : la fixation avec friction des première et deuxième friandises à l'intérieur des renfoncements.

12. Procédé selon la revendication 10, dans lequel ladite étape d'insertion comprend : l'utilisation de l'adhésion afin de fixer les première et deuxième friandises à l'intérieur des renfoncements.

13. Procédé selon la revendication 10, comprenant l'étape supplémentaire de : insertion d'une multiplicité desdites première ou deuxième friandises pour animal de compagnie dans au moins un renfoncement de ladite multiplicité de renfoncements.

14. Jouet pour animal de compagnie (T) qui comprend une ou plusieurs friandises alimentaires comestibles (18) afin d'amener un animal à jouer avec ledit jouet pour animal de compagnie, ledit jouet pour animal de compagnie comportant :
un élément de corps (10) ayant une paroi latérale flexible (12) avec une surface extérieure,
caractérisé par des moyens destinés à retenir de façon libérable les friandises alimentaires comestibles, une friandise alimentaire comestible (18) étant positionnée dans au moins certains desdits moyens de retenue, lesdits moyens de retenue étant formés à travers ledit élément de corps, lesdits moyens de retenue s'étendant à travers à des profondeurs différentes de ladite paroi latérale, et au moins certains desdits moyens de retenue ne s'étendant pas totalement à travers ladite paroi latérale.

15. Jouet pour animal de compagnie selon la revendication 14, dans lequel : ledit élément de corps englobe un intérieur sensiblement creux et fermé.

16. Jouet pour animal de compagnie selon la revendication 14, dans lequel : lesdits moyens de retenue fixent ladite friandise alimentaire comestible par friction.

17. Jouet pour animal de compagnie selon la revendication 14, dans lequel : lesdits moyens de retenue retiennent ladite friandise alimentaire comestible par adhésion.
